Europäisches Patentamt

(19) European Patent Office (11) Numéro de publication: **0 270 586**

Office européen des brevets **B1**

(12) **FASCICULE DE BREVET EUROPEEN**

(45) Date de publication du fascicule du brevet: 28.11.90    (51) Int. Cl.⁵: **B 29 C 65/22,** B 29 C 65/20, B 31 B 1/84

(21) Numéro de dépôt: **87903336.3**

(22) Date de dépôt: **20.05.87**

(86) Numéro de dépôt international: **PCT/FR87/00170**

(87) Numéro de publication internationale: **WO 87/07205 03.12.87 Gazette 87/27**

(60) **Demande divisionnaire 89121868.7 déposée le 20/05/87.**

(54) **DISPOSITIF DE SOUDAGE D'UN EMBOUT SUR UN FILM THERMOPLASTIQUE.**

(30) Priorité: **21.05.86 FR 8607206**

(43) Date de publication de la demande: **15.06.88 Bulletin 88/24**

(45) Mention de la délivrance du brevet: **28.11.90 Bulletin 90/48**

(84) Etats contractants désignés: **AT BE CH DE GB IT LI LU NL SE**

(56) Documents cités:
DE-A-1 536 095   NL-A-7 507 768
DE-A-2 117 328   US-A-2 981 443
FR-A-1 278 536   US-A-3 166 459
FR-A-1 349 415   US-A-3 283 671
GB-A-1 191 701   US-A-4 292 118
GB-A-1 511 729   US-A-4 359 361
GB-A-2 074 934

(73) Titulaire: **BAXTER INTERNATIONAL INC. One Baxter Parkway Deerfield, IL 60015 (US)**

(72) Inventeur: **SUSINI, Etienne 8, chemin de la Vallée F-94440 Villecresnes (FR)** Inventeur: **SOUBRIER, Pierre 62, boulevard Louis Schmidt B-1040 Bruxelles (BE)**

(74) Mandataire: **Fruchard, Guy et al CABINET BOETTCHER 23, rue la Boétie F-75008 Paris (FR)**

Courier Press, Leamington Spa, England.

**Description**

La présente invention concerne un dispositif de soudage d'un embout sur un film thermoplastique.

On connaît des machines pour la réalisation de poches équipées d'un embout à partir d'un film thermoplastique. Dans une étape de la réalisation des poches, les embouts doivent être soudés sur le film thermoplastique, généralement au droit de perforations préalablement réalisées dans le film. Le soudage de l'embout sur le film peut être réalisé soit par ultrasons, soit par un organe de soudage chauffé de façon continue, soit encore par une résistance chauffante alimentée de façon intermittente par un courant électrique.

L'invention concerne plus particulièrement un dispositif de soudage ayant une tête de soudage comportant une résistance chauffante alimentée de façon intermittente et plus particulièrement une résistance chauffante annulaire destinée à réaliser une soudure circulaire, par exemple autour d'un organe tubulaire de l'embout à fixer sur le film thermoplastique. Dans ce cas, la résistance chauffante annulaire est alimentée en électricité par des moyens disposés en deux points diamétralement opposés. Dans les dispositifs connus, il existe généralement une surchauffe au niveau de la connexion entre les moyens d'alimentation et la résistance chauffante, de sorte qu'il existe un risque important de dépôt de matière thermoplastique sur la résistance chauffante, ce qui entraîne un encrassement de celle-ci et la nécessité d'une intervention.

Un but de la présente invention est de proposer un dispositif de soudage comportant une résistance chauffante ayant une structure permettant d'obtenir un chauffage homogène lors de l'alimentation électrique afin de réaliser une soudure de haute qualité sans dépôt de matière thermoplastique sur la résistance chauffante.

En vue de la réalisation de ce but, on propose selon l'invention un dispositif de soudage d'un embout sur un film thermoplastique comportant un châssis, une plaque support portée par le châssis et mobile par rapport à celui-ci, une tête de soudage reliée rigidement à la plaque support, au moins une résistance chauffante annulaire portée par la tête de soudage et ayant des tiges d'alimentation électrique disposées en deux points diamétralement opposés, et des moyens de diffusion d'un gaz de refroidissement au voisinage de la fixation des tiges d'alimentation sur la résistance chauffante.

Ainsi, le gaz de refroidissement assure une régulation de la température en un point de la résistance chauffante qui est particulièrement sollicité.

Selon un mode de réalisation préféré de cet aspect de l'invention, les moyens de diffusion d'un gaz de refroidissement comportent des canaux s'étendant dans la tête de soudage et entourant les tiges d'alimentation. Ainsi, le gaz de refroidissement assure non seulement la régulation de la température au voisinage de la fixation des tiges d'alimentation mais également le refroidissement des tiges d'alimentation elles-mêmes.

D'autres caractéristiques et avantages de l'invention ressortiront encore de la lecture de la description qui suit en liaison avec les dessins ci-joint parmi lesquels:

la figure 1 est une vue de côté du dispositif de soudage selon l'invention partiellement en coupe selon la ligne I—I des figures 2 et 5.

la figure 2 est une vue de dessus de la tête de soudage selon la ligne II—II de la figure 1.

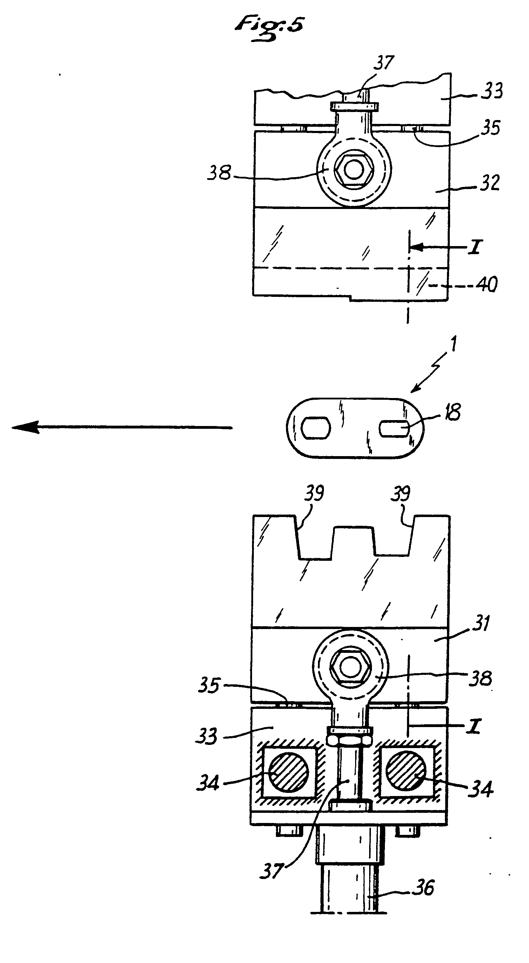

La figure 3 est une vue en coupe de la tête de soudage selon la ligne III—III de la figure 2.

La figure 4 est une vue en perspective de la résistance chauffante avec ses tiges d'alimentation.

La figure 5 est une vue de dessus des moyens de positionnement selon la ligne V—V de la figure 1.

La figure 6 est une vue de côté à échelle réduite de l'ensemble du dispositif.

La figure 7 est une vue en coupe agrandie selon la ligne VII—VII de la figure 6.

La figure 8 est une vue de côté schématique d'une variante de réalisation de l'invention incluant des moyens de blocage de film.

La figure 9 est une vue en perspective, partiellement coupée, des moyens de blocage de film.

En référence aux figures, le dispositif de soudage selon l'invention est destiné à souder des embouts généralement désignés en 1 sur un film thermoplastique 2. Le dispositif comporte un châssis formé par une plaque 3 s'étendant transversalement au film au-dessus de celui-ci. Une plaque support 4 est portée par le châssis 3 au moyen d'une tige 5 d'un vérin à double effet 6. Lors des mouvements de la tige du vérin 5, la plaque support 4 est guidée par trois tiges de guidage 7 fixées en triangle à la plaque support 4 autour de la tige de vérin 5 et coulissant dans des douilles 8 portées par le châssis 3.

Une tête de soudage généralement désignée en 9 est reliée rigidement à la plaque support 4 autour de la tige de vérin 5 et coulissant dans des douilles 8 portées par le châssis 3.

Une tête de soudage généralement désignée en 9 est reliée rigidement à la plaque support 4 par les entretoises 10.

Dans le mode de réalisation préféré illustré, la tête de soudage comporte une partie supérieure 11 et une partie inférieure 12 reliées entre elles par des vis 13. La partie supérieure 11 comporte dans sa face inférieure une rainure en arc de cercle 14 dont les extrémités sont reliées à des canaux d'alimentation en fluide de refroidissement 15 percés dans la partie supérieure 11 de la tête de soudage et débouchant sur un côté de la partie supérieure 11. La rainure 14 est de préférence encadrée par des joints d'étanchéité 16 qui assurent une bonne étanchéité vis-à-vis de l'extérieur.

Au voisinage de son centre, la tête de soudage comporte deux alésages verticaux 17 traversant la partie supérieure 11 et la partie inférieure 12 et ayant un diamètre légèrement supérieur à des organes tubulaires 18 des embouts 1. Les alésages 17 servent de guides pour les organes tubulaires 18 lors de la descente de la tête de soudage 9. De part et d'autre de chaque alésage 17, la tête de soudage 9 comporte des canaux verticaux 19 dans lesquels s'étendent des tiges d'alimentation 20 d'une résistance chauffante annulaire 21. Chaque canal 19 est fermé à son extrémité supérieure par un manchon électriquement isolant 22 à travers lequel s'étend une tige d'alimentation 20. A leur partie supérieure, les tiges d'alimentation 20 sont reliées par des connecteurs 23 à un câble d'alimentation électrique 24.

A sa partie inférieure, la tête de soudage comporte une plaque 25 fixée à la partie inférieure 12, par exemple par collage, et formée d'une matière anti-adhérente vis-à-vis de la matière formant le film thermoplastique 2 et les embouts 1. La plaque 25 est percée d'ouvertures en alignement et de dimension égale aux alésages 17. La plaque 25 comporte également des ouvertures 26 en regard des canaux 19. Les ouvertures 26 sont de préférence d'une dimension légèrement supérieure à la dimension des tiges d'alimentation 20, mais légèrement inférieure à la largeur de la résistance annulaire 21.

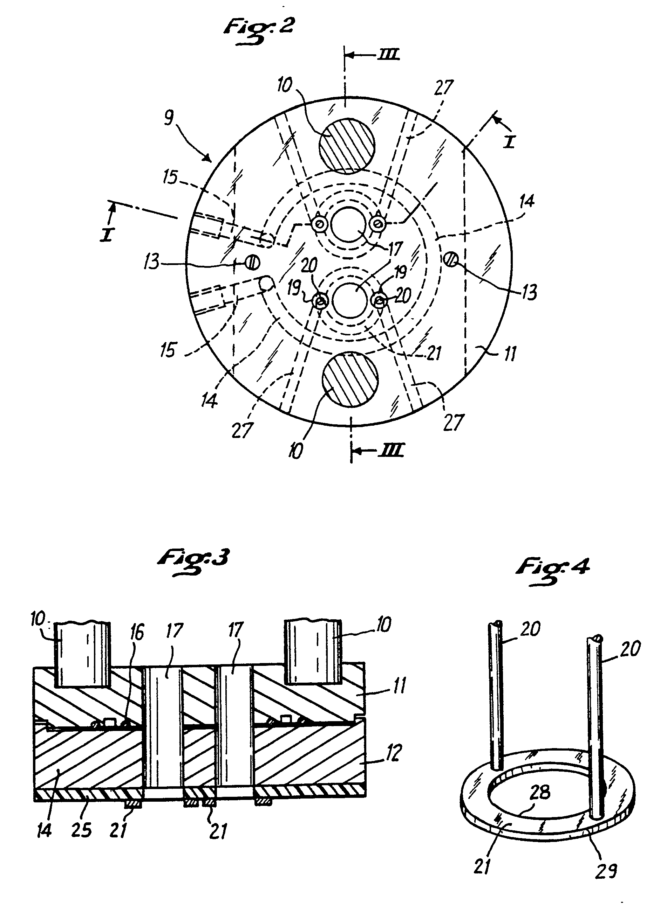

Les canaux verticaux 19 sont reliés à une source de fluide de refroidissement (non représentée), par exemple de l'air réfrigéré et filtré, par des canaux 27 percés dans la paroi de la partie inférieure 12 de la tête de soudage et débouchant sur le côté de celle-ci (figure 2).

On voit sur la figure 4 que les tiges d'alimentation 20 ont de préférence un diamètre inférieur à la largeur de la résistance chauffante annulaire 21 et sont fixées à celle-ci transversalement à sa face supérieure, de préférence à mi-distance de son bord interne 28 et de son bord externe 29. Les tiges d'alimentation 20 sont fixées à la résistance chauffante 21 en deux points diamétralement opposés de celle-ci. Lorsque les résistances chauffantes 21, qui sont ici au nombre de deux, sont mises en place sur la tête de soudage, elles entourent chacune l'un des alésages verticaux 17.

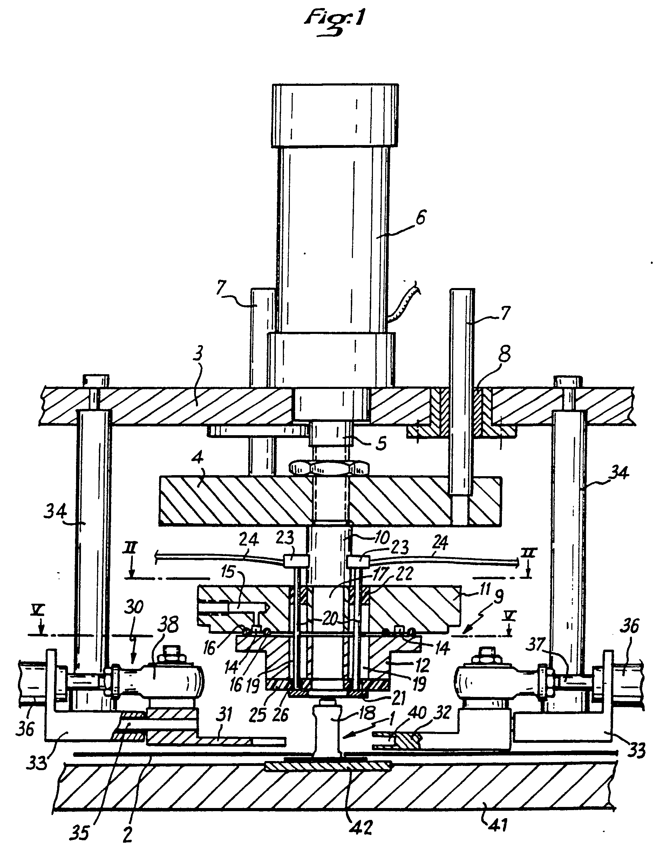

En dessous de la tête de soudage 9, le dispositif comporte des moyens de positionnement généralement désignés en 30. Les moyens de positionnement 30, représentés en détail sur les figures 1 et 5, en position ouverte, comprennent des mors de positionnement 31, 32, chacun monté de façon mobile sur une console 33 reliée au châssis 3 par des colonnettes 34. Le mouvement des mors 31, 32, par rapport aux consoles 33, est guidé par des tiges de guidage 35 s'étendant dans des alésages horizontaux des consoles 33. Chacune des consoles 33 porte également un vérin 36 dont la tige 37 s'étend horizontalement et est raccordée par une rotule 38 à la partie supérieure de l'un des mors 31, 32. Le mors 31 comporte un talon sur lequel est fixé l'extrémité de la tige de vérin 37 et une plaque mince s'étendant horizontalement vers les organes tubulaires 18 de l'embout 1 disposé sous la tête de soudage. Cette plaque mince comporte des encoches 39 qui, lors de la fermeture des moyens de positionnement, viennent s'appuyer sur les organes tubulaires 18 et encadrer ceux-ci. Le mors 32 comporte de façon similaire un talon sur lequel est fixée l'extrémité de la tige de vérin 37 et une partie avant comportant une rainure 40 dans laquelle vient s'engager l'extrémité de la plaque mince du mors 31 lors de la fermeture des moyens de positionnement.

En dessous des moyens de positionnement, le dispositif comporte de préférence une contreplaque 41 comportant, à l'aplomb d'un embout 1, un morceau de matière anti-adhérente 42.

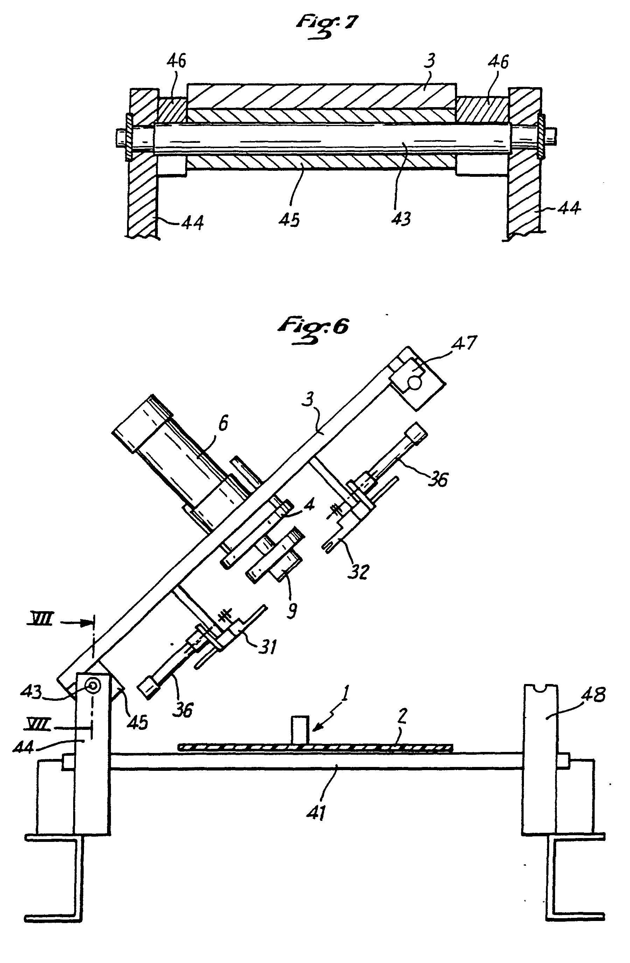

Afin de permettre une intervention sur le dispositif de soudage sans risquer de polluer le film thermoplastique 2 en place, le châssis 3 est de préférence, comme illustré par la figure 6, monté pivotant sur un arbre de pivotement 43 porté par un bâti 44 adjacent au film 2. L'arbre de pivotement 43 s'étend parallèlement au bord du film 2. Le châssis 3 est de préférence monté sur l'arbre de pivotement 43 par l'intermédiaire d'une poutrelle 45 percée d'un alésage longitudinal, comme illustré par la figure 7, le châssis 3 a une largeur de préférence inférieure à la distance entre les éléments de bâti 44, de sorte qu'il peut être déplacé en translation sur l'arbre de pivotement 43 selon une direction parallèle à cet arbre. Le positionnement précis du châssis 3 est assuré par des cales en U inversé 46 ayant chacune une épaisseur appropriée à la position qui est recherchée pour le châssis 3. A l'extrèmité opposée à l'arbre de pivotement 43, le châssis 3 comporte des éléments de fixation 47 sur des éléments de bâti 48 disposés en vis-à-vis des éléments de bâti 44 afin de maintenir le châssis 3 par ses deux extrémités.

Le fonctionnement du dispositif selon l'invention est le suivant: le châssis est tout d'abord mis en position en utilisant les cales 46 appropriées afin que la tête de soudage 9 vienne au-dessus du point où les embouts s'arrêteront les uns à la suite des autres lors de l'avance pas à pas du film 2, cette avance pas à pas étant obtenue par des moyens indépendants de la tête de soudage et non représentés. Lorsqu'un embout 1 se présente au poste de soudage, les mors 31, 32, sont tout d'abord refermés par l'action des vérins 36. Les embouts 1 sont alors positionnés avec précision et le vérin 6 est actionné pour faire descendre la tête de soudage 9 selon une première phase. Dès que la partie supérieure des organes tubulaires 18 d'un embout 1 est engagée dans les alésages verticaux 17 de la tête de soudage, les mors 31, 32, sont écartés afin de ne pas gêner la descente ultérieure de la tête de soudage. Le mouvement de la tête de soudage est poursuivi jusqu'à ce que les résistances chauffantes 21 viennent en contact avec le film thermoplastique 2. Une impulsion électrique est envoyée dans les câbles électriques 24 afin de faire passer un courant entre les tiges d'alimentation 20 et provoquer ainsi le chauffage de la résistance 21 et la fusion partielle du film thermoplastique 2 et de l'embase de l'embout 1. Pendant l'opération de soudage proprement dite, un liquide de refroidissement est injecté par l'un des canaux d'alimentation 15 et s'évacue par l'autre canal d'alimentation 15 après avoir circulé dans la rainure en arc de cercle 14. On évite ainsi un échauffement trop important de la tête de soudage 9. De plus, de l'air filtré et réfrigéré est injecté par les canaux d'alimentation 27 et s'écoule autour des tiges 20 puis à travers les ouvertures 26 en raison du jeu qui existe entre la plaque inférieure 25 et la résistance chauffante 21. L'air de refroidissement sert d'une part à refroidir la jonction entre les tiges d'alimentation 20 et la résistance chauffante 21, cette jonction ayant normalement tendance à être portée à une température plus élevée que le reste de la résistance annulaire, et s'écoule ensuite sur le film thermoplastique 2. Après l'arrêt de l'impulsion de chauffage à travers la résistance chauffante 21, l'écoulement d'air à travers les ouvertures 26 sert donc à refroidir la résistance chauffante 21 ainsi que le film thermoplastique 2 et l'embout 1. Ainsi on évite que de la matière thermoplastique reste trop molle après le chauffage et n'adhère à la résistance chauffante 21, ce qui provoquerait la formation de bavures lors du relèvement ultérieur de la tête de soudage 9.

On comprendra de ce qui précède que les moyens de positionnement 30 formés par les mors mobiles 31, 32 peuvent être utilisés en relation avec d'autres têtes de soudage que celle qui est décrite à titre de mode de réalisation préféré dans la présente demande. En particulier, les moyens de positionnement 30 pourront être utilisés en relation avec une tête de soudage à haute fréquence comportant un ou plusieurs alésages de guidage pour la partie des embouts en saillie par rapport au film.

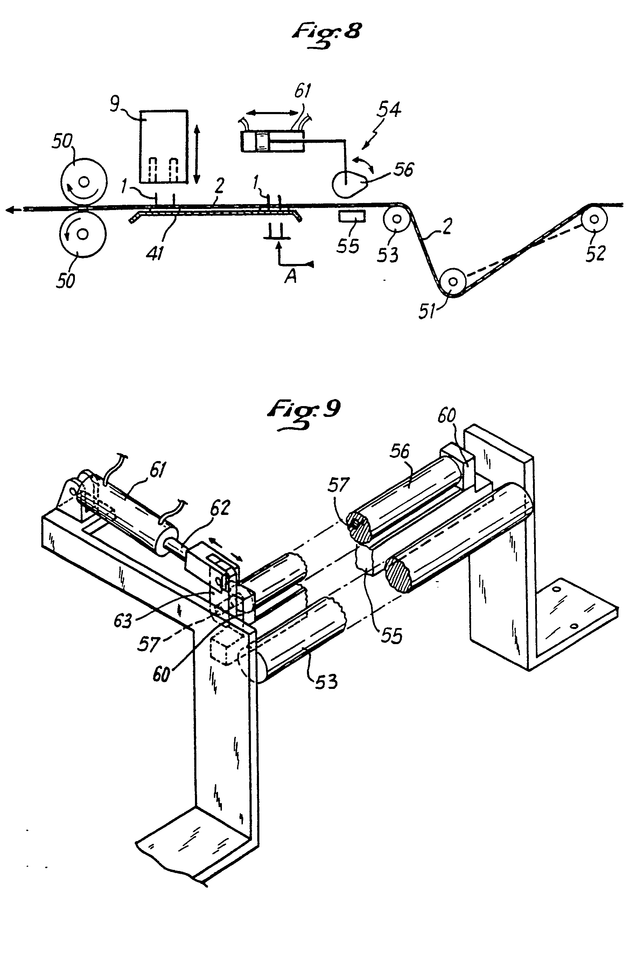

Les figures 8 et 9 illustrent un dispositif complémentaire également utilisé pour le positionnement précis des embouts au moment du soudage.

La figure 8 illustre de façon schématique un dispositif de soudage comprenant une tête de soudage 9 sous laquelle défile un film 2 équipé d'embouts 1 mis en place à un poste d'alimentation symbolisé par la flèche A. Le film 2 est entraîné en aval de la tête de soudage 9 selon un sens de déplacement du film 2 par des rouleaux d'entraînement 50 tournant en sens inverse l'un de l'autre et disposés par rapport au film pour pincer celui-ci. Les rouleaux d'entraînement sont mis en mouvement de façon intermittente d'une manière connue en soi et maintiennent le film immobile en aval de la tête de soudage lorsqu'ils sont arrêtés. Lors des différents mouvements du films 2, une tension régulière est assurée en amont du film par une barre de tension oscillante 51 montée en amont du dispositif de soudage entre deux rouleaux d'appui de film 52 et 53. Le rouleau 53 sert également de rouleau de renvoi pour maintenir la partie amont du film dans le plan de la contreplaque 41.

Etant donné que le film présente une certaine élasticité, il existe un risque d'allongement du film sous l'effet de la barre de tension 51, ce qui nuit à un positionnement précis des embouts 1 à l'aplomb de la tête de soudage 9.

Pour éviter cet inconvénient, on prévoit avantageusement selon l'invention des moyens de blocage de film généralement désignés en 54 et disposés en amont de la tête de soudage 9.

La figure 9 illustre un mode de réalisation préféré des moyens de blocage 54. Selon ce mode de réalisation, les moyens de blocage comprennent des organes de pincement du film formés par une barre d'appui 55 montée fixe d'un côté du film et un organe excentrique 56 monté pivotant sur un côté opposé du film pour pivoter entre une position écartée du film illustrée par la figure 8, et une position en contact avec le film illustrée par la figure 9. Sur le mode de réalisation représenté, l'organe excentrique 56 est un cylindre fixé de façon excentrique sur un arbre 57 lui-même monté pivotant sur des consoles 60 fixées au bâti de la machine. La position du cylindre 56 est déterminée par un vérin 61 porté par le châssis et convenablement relié de façon non représentée à un organe de commande associé à la commande des rouleaux d'entraînement 50. La tige 62 du vérin 61 est reliée à l'arbre 57 par une biellette 63 fixée en rotation par rapport à l'arbre 57.

Le fonctionnement de ce dispositif est le suivant:

lorsque les rouleaux d'entraînement 50 sont mis en rotation, la biellette 63 est tirée par le vérin 61 et le rouleau excentrique 56 est écarté du film, permettant ainsi un mouvement de déplacement du film 2. Dès que les rouleaux d'entraînement 50 sont arrêtés, la biellette 63 est repoussée et le film 2 est pincé entre le rouleau excentrique 56 et la barre d'appui 55.

Bien entendu l'invention n'est pas limitée au mode de réalisation qui vient d'être décrit et est susceptible de variantes de réalisation qui apparaîtront à l'homme de métier. En particulier, bien que pour des raisons de commodité de montage les tiges d'alimentation 20 de la tête de soudage 9 aient été représentées perpendiculaires à la résistance chauffante 21, leur forme et leur orientation peuvent être adaptées aux nécessités de montage sur une tête de soudage particulière. De même, bien que selon la réalisation préférentielle illustrée, les canaux d'alimentation en fluide de refroidissement entourent les tiges 20, on peut prévoir une série de buses portées par la tête de soudage et dirigées vers le point de raccordement entre les tiges d'alimentation 20 et la résistance chauffante 21.

En ce qui concerne la mobilité en translation du châssis 3, on peut prévoir de remplacer les cales 46 par un dispositif comportant une crémaillère réalisée sur un côté de l'arbre de pivotement 43 avec laquelle coopère un pignon denté solidaire du châssis 3 et entraîné en rotation par un volant.

## Revendications

1. Dispositif de soudage d'un embout (1) sur un film thermoplastique (2) comportant un châssis (3), une plaque support (4) portée par le châssis et mobile par rapport à celui-ci, une tête de soudage (9) reliée rigidement à la plaque support, et au moins une résistance chauffante (21) annulaire portée par la tête de soudage et ayant des tiges d'alimentation électrique (20) disposés en deux points diamétralement opposés, caractérisé en ce qu'il comporte des moyens (27, 19) de diffusion d'un gaz de refroidissement au voisinage de la fixation des tiges d'alimentation (20) sur la résistance chauffante (21).

2. Dispositif de soudage selon la revendication 1, caractérisé en ce que les moyens de diffusion d'un gaz de refroidissement comportent des canaux (19) s'étendant dans la tête de soudage et entourant les tiges d'alimentation (20).

3. Dispositif de soudage selon la revendication 1, caractérisé en ce que la tête de soudage comporte une partie supérieure (11) et une partie inférieure (12) reliées entre elles et des moyens (14, 15) de circulation d'un fluide de refroidissement entre la partie supérieure (11) et la partie inférieure (12).

4. Dispositif de soudage selon la revendication 3, caractérisé en ce que les moyens de circulation d'un fluide de refroidissement comprennent une rainure (14) en arc de cercle formée dans la face inférieure de la partie supérieure (11) de la tête de soudage et des canaux d'alimentation (15) ménagés dans la partie supérieure de la tête de soudage et débouchant d'une part aux extrémités de la rainure (14) et d'autre part sur un côté de la partie supérieure.

**Patentansprüche**

1. Vorrichtung zum Anschweißen eines Ansatzes (1) an einer thermoplastischen Folie (2) umfassend ein Chassis (3), eine an dem Chassis gehaltene und gegenüber diesem bewegliche Trägerplatte (4), einen starr mit der Trägerplatte verbundenen Schweißkopf (9) und mindestens einen an dem Schweißkopf gehaltenen ringförmigen Heizwiderstand (21) mit Stäben (20) zur Stromversorgung, die an zwei einander diametral gegenüberliegenden Stellen angeordnet sind, dadurch gekennzeichnet, daß sie Mittel (27, 19) zur Verteilung eines Kühlgases nahe den Befestigungsstellen der Versorgungsstäbe (20) an dem Heizwiderstand (21) hat.

2. Schweißvorrichtung nach Anspruch 1, dadurch gekennzeichnet, daß die Mittel zum Verbreiten eines Kühlgases Kanäle (19) umfassen, die in dem Schweißkopf verlaufen und die Versorgungsstäbe (20) einschließen.

3. Schweißvorrichtung nach Anspruch 1, dadurch gekennzeichnet, daß der Schweißkopf einen oberen Abschnitt (11) und einen mit diesem verbundenen unteren Abschnitt (12) sowie Mittel (14, 15) für die Zirkulation eines Kühlfluides zwischen dem oberen Abschnitt (11) und dem unteren Abschnitt (12) umfaßt.

4. Schweißvorrichtung nach Anspruch 3, dadurch gekennzeichnet, daß die Mittel für die Zirkulation eines Kühlfluides eine bogenförmige Nut (14), die in der Unterseite des oberen Abschnittes (11) des Schweißkopfes ausgebildet ist, und Zuführkanäle (15) umfaßt, die in dem oberen Abschnitt des Schweißkopfes ausgebildet sind und einerseits an den Enden der Nut (14) und andererseits an einer Seite des oberen Abschnittes münden.

**Claims**

1. A device for sealing a port or fitment (1) on a thermoplastic film (2) that includes a frame (3), a support plate (4) carried by the frame and movable with respect to the frame, a welding head (9) rigidly connected to the support plate, and at least one ring-shaped heating resistance (21) carried by the welding head and which has electricity feeding rods (20) located in two diametrically opposed points, characterized in that it includes means (27, 19) for the diffusion of a cooling gas in the vicinity of the fixation of the feeding rods (20) on the heating resistance (21).

2. A sealing device according to Claim 1, characterized in that the means for the diffusion of a cooling gas include channels (19) which extend into the welding head and surround the feeding rods (20).

3. A sealing device according to Claim 1, characterized in that the welding head has an upper part (11) and a lower part (12) connected together, and means (14, 15) for the circulation of a cooling fluid between the upper part (11) and the lower part (12).

4. A sealing device according to claim 3, characterized in that the means for the circulation of a cooling fluid includes a groove (14) shaped like an arc of a circle, formed in the lower face of the upper part (11) of the welding head, and feeding channels (15) provided in the upper part of the sealing head and opening, at one end at the ends of the groove (14) and at the other end on a side of the upper part.

Fig.1

Fig. 2

Fig. 3

Fig. 4

2

*Fig:5*

EP  0 270 586  B1

*Fig.7*

46    3    46

44    45    43    44

*Fig.6*

47

3

6

36

4

32

9

31

VIII

43

VIII

44    45    36

1    2    48

41

4

*Fig. 8*

*Fig. 9*